# FASCICULE DE BREVET EUROPEEN

(11) **EP 2 014 540 B1**
(45) Date de publication et mention de la délivrance du brevet: **07.07.2010**
(21) Numéro de dépôt: 08305186.2
(22) Date de dépôt: 21.05.2008
(51) Int. Cl.: B62D 25/08, B62D 25/14

(54) **Structure d'une partie avant de la caisse d'un véhicule automobile**
Struktur eines Vorderteils der Karosserie eines Kraftfahrzeugs
Structure of a front part of the body of an automotive vehicle.

(30) Priorité: 11.07.2007 FR 0756427
(43) Date de publication de la demande: 14.01.2009
(73) Titulaire: Peugeot Citroën Automobiles SA, 78943 Vélizy-Villacoublay Cedex (FR)
(72) Inventeur: Lorette, Frédéric, 91120, Palaiseau (FR)

(56) Documents cités:
- EP-A- 1 234 751
- EP-B- 1 184 262
- DE-A- 10 200 890
- FR-A- 2 507 549
- JP-A- 63 242 782
- US-A- 4 717 198
- US-A- 4 955 662

## Description

La présente invention concerne une structure d'une partie avant de la caisse d'un véhicule automobile.

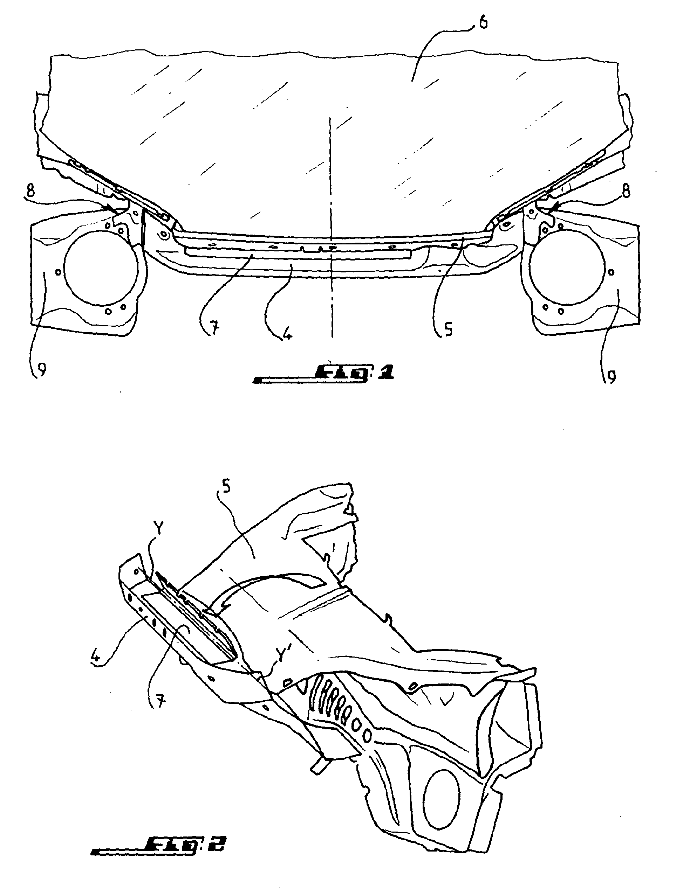

Les figures 1 à 5 représentent une telle structure qui comprend un compartiment moteur 1 fermé par un capot et qui est séparé de l'habitable 2 du véhicule par un tablier sensiblement transversal 3 dont une partie supérieure comporte, d'avant en arrière du véhicule, un collecteur d'auvent transversal 4 et une traverse inférieure de baie 5 sur la partie formant nez 5a de laquelle vient s'appuyer la partie inférieure du pare-brise 6. La partie inférieure du pare-brise 6 est fixée au moyen d'un cordon de colle sur la partie formant nez 5a avant de la traverse inférieure de baie 5.

Un document de l'état de la technique FR-2507549-A1 décrit une structure selon le préambule de la revendication 1, dépourvue d'un nez de traverse inférieure de baie, mais comprenant une cloison de liaison entre un support de suspension et un support de colonne de direction afin d'en augmenter la rigidité lors d'un choc du véhicule contre un obstacle externe à celui-ci.

Le collecteur d'auvent 4 est fixé par soudage à la traverse inférieure de baie 5 par l'intermédiaire d'une cloison de collecteur d'auvent 7. La traverse inférieure de baie 5 s'étend sensiblement sur toute la largeur du véhicule et est fixée rigidement à des éléments de carrosserie tels qu'un tablier supérieur, une doublure de traverse inférieure de baie, une cloison formant collecteur d'auvent et une doublure d'aile. Le collecteur d'auvent 4 est en outre fixé par soudage au niveau de ses parties d'extrémités à deux goussets latéraux 8 s'étendant sensiblement en direction longitudinale du véhicule et chacun solidaire d'une doublure de la traverse inférieure de baie 5 et d'un support de suspension 9.

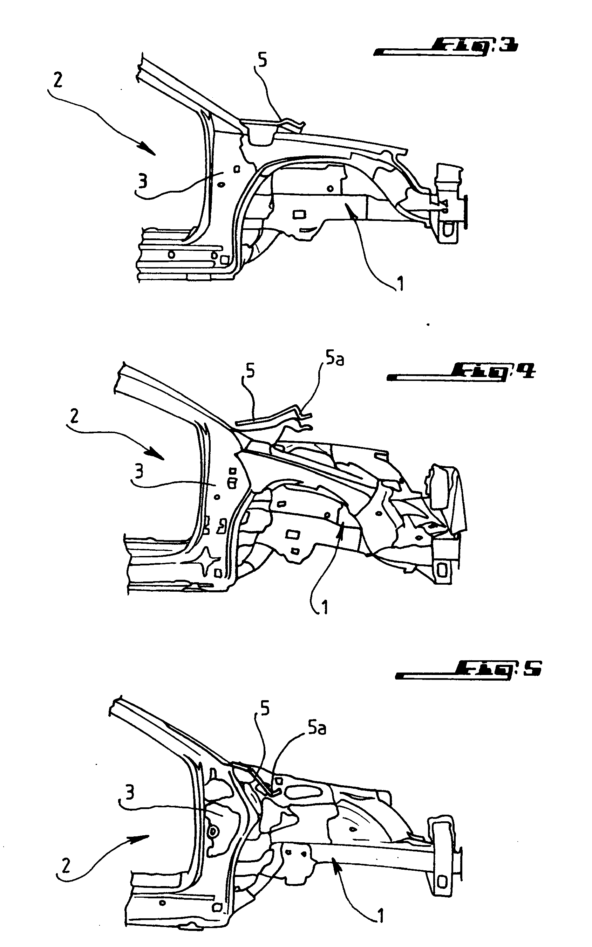

Une telle structure pose le problème que les vibrations dues au moteur en fonctionnement du véhicule produisent comme représenté par les deux flèches en figure 2 un mouvement vertical et horizontal du collecteur d'auvent 4 autour de la carre de la cloison du collecteur d'auvent 7 suivant l'axe transversal de rotation YY' du fait de la raideur du collecteur d'auvent, se traduisant par des vibrations vers le haut ou vers le bas de la partie formant nez 5a de la traverse inférieure de baie 5 comme représenté aux figures 4 et 5 relativement à la position initiale de cette traverse en figure 3. Ces vibrations de la traverse inférieure de baie 5 sont ainsi néfastes à la tenue aux vibrations du pare-brise 6 du véhicule qui émet alors des bruits en vibrant.

La présente invention a pour but de résoudre le problème ci-dessus en proposant une solution permettant de raidir la traverse inférieure de baie et, par conséquent, le pare-brise du véhicule.

Selon l'invention, la structure d'une partie avant de la caisse d'un véhicule automobile comportant un tablier sensiblement transversal séparant l'habitacle du compartiment moteur du véhicule et dont une partie supérieure comporte, d'avant en arrière, un collecteur d'auvent transversal et une traverse inférieure de baie sur laquelle vient s'appuyer la partie inférieure du pare-brise, et deux goussets latéraux chacun solidaire d'une doublure de la traverse inférieure de baie et d'un support de suspension, les extrémités du collecteur d'auvent étant solidaires des deux goussets, est **caractérisée en ce qu**'elle comprend deux cloisons latérales rigides de renforcement de la traverse inférieure de baie, fixées chacune d'une part au gousset correspondant et d'autre part à la traverse inférieure de baie au niveau de la partie d'extrémité avant de cette dernière, lesdites cloisons étant disposées dans des plans inclinés convergeant l'un vers l'autre vers le haut.

Chaque cloison de renforcement comprend une fenêtre permettant une circulation d'air dans le collecteur d'auvent et le passage d'un outil de vissage pour fixer une traverse de planche de bord à la structure par l'intermédiaire de l'ensemble comprenant la partie supérieure du tablier et la doublure de traverse inférieure de baie.

Chaque cloison de renforcement est fixée par soudage à la traverse inférieure de baie et par des boulons au gousset associé.

Chaque gousset comprend une paroi sensiblement verticale à laquelle est fixée par les boulons une paroi d'extrémité de la cloison correspondante et, s'étendant perpendiculairement à la paroi verticale, une paroi comportant des perçages traversants permettant de visualiser les boulons de fixation et d'assurer un écrasement longitudinal du gousset en cas de choc frontal au véhicule d'une intensité déterminée.

L'invention vise également un véhicule automobile équipé d'une structure telle que définie précédemment.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention et dans lesquels :
- la figure 1 est une vue en perspective de dessus de la structure d'une partie avant de la caisse d'un véhicule automobile ;
- la figure 2 est une vue de ¾ en perspective d'une partie de la structure de la figure 1 ;
- les figures 3 à 5 sont des vues de côté de la structure de la figure 1 et du compartiment moteur du véhicule ;
- la figure 6 est une vue de côté en perspective de la structure d'une partie avant de la caisse d'un véhicule automobile conforme à l'invention ;
- la figure 7 est une vue agrandie de la partie cerclée en VII de la figure 6 ;
- la figure 8 est une vue en perspective suivant la flèche VIII de la figure 7 ;
- la figure 9 est une vue en arrière suivant la flèche IX de la structure de la figure 6 ;
- la figure 10 est une vue en perspective de côté suivant la flèche X de la figure 9 ;
- la figure 11 est une vue en perspective montrant l'insertion d'un outil de vissage dans la structure de la figure 6 pour fixer une traverse de planche de bord à cette structure ;
- la figure 12 est une vue en perspective représentant la fixation d'une cloison de renforcement de l'invention à un gousset latéral appartenant à la structure de la figure 6 ; et
- la figure 13 est une vue en perspective semblable à celle de la figure 12 et détaillant la fixation de la cloison de renforcement au gousset.

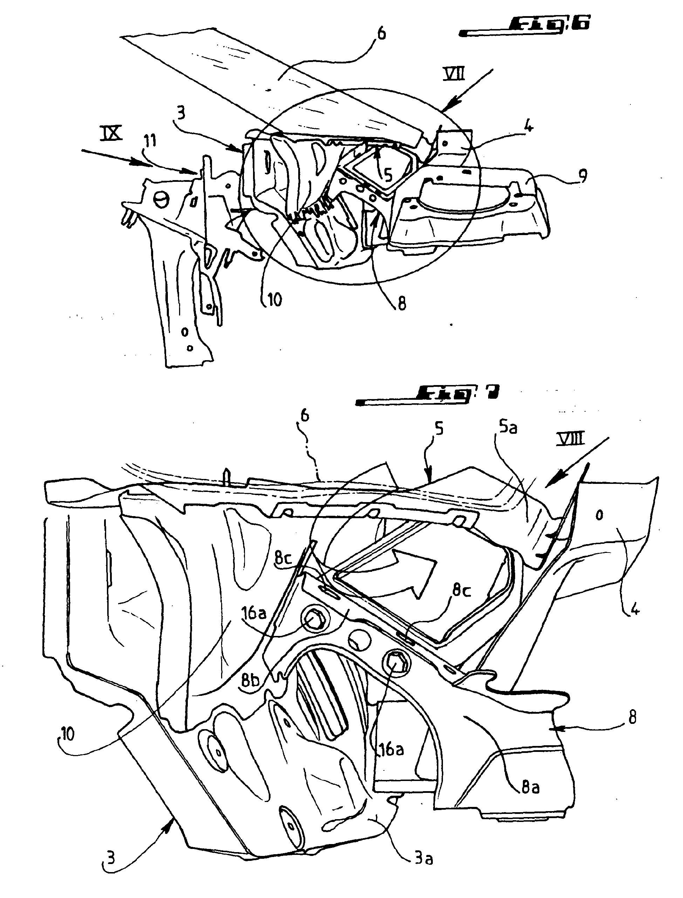

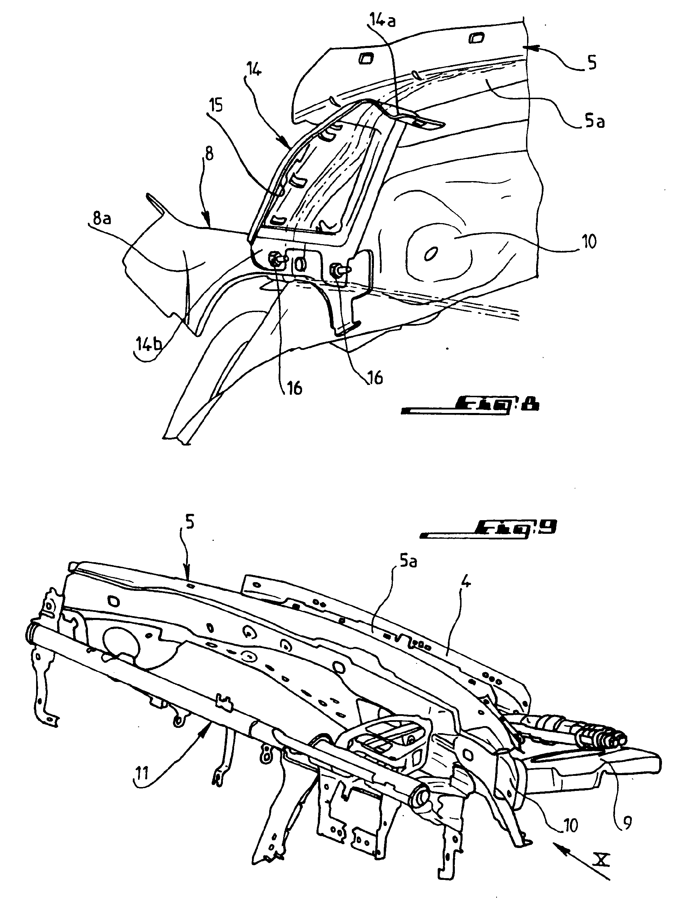

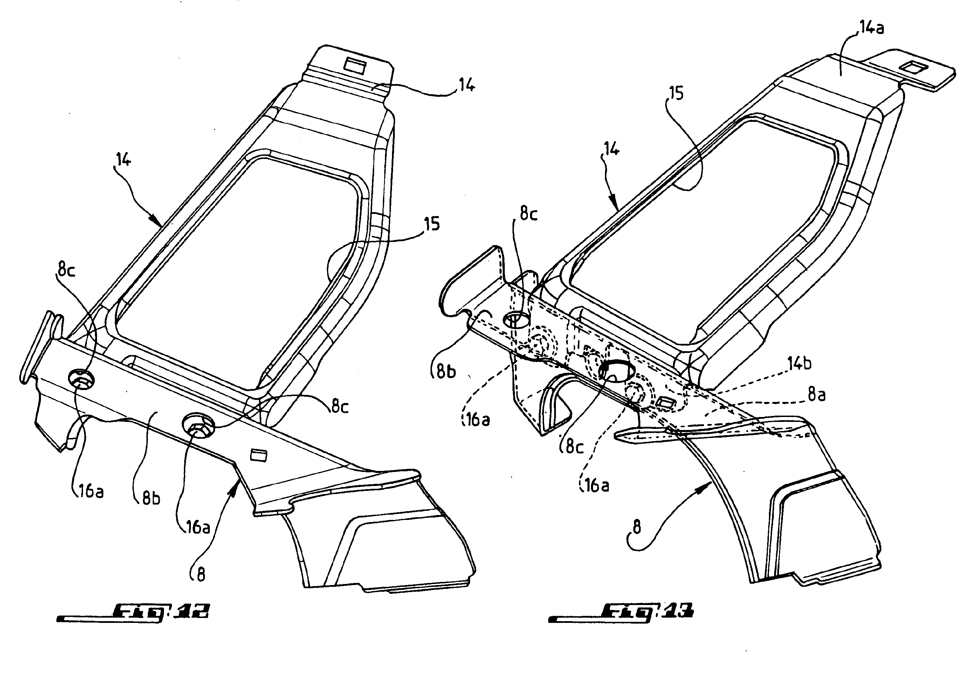

La structure de la partie avant de la caisse d'un véhicule automobile qui va être décrite en référence aux figures 6 à 13 comporte les mêmes éléments que celle décrite aux figures 1 à 5 et, par conséquent, tous les éléments communs entre ces deux structures portent les mêmes références.

La structure des figures 6 à 13 comprend ainsi le tablier sensiblement transversal 3 dont la partie supérieure comporte, d'avant en arrière du véhicule, le collecteur d'auvent transversal 4 et la traverse inférieure de baie 5 sur la partie formant nez avant 5a de laquelle vient s'appuyer la partie inférieure du pare-brise 6, et les deux goussets latéraux 8, chacun solidaire de la doublure 10 de la traverse inférieure de baie 5 et du support de suspension correspondant 9.

La partie inférieure du pare-brise 6 est fixée sur la partie formant nez de la traverse inférieure de baie 5 au moyen d'un cordon de colle, non représenté, et la traverse inférieure de baie 5 s'étend sensiblement sur toute la largeur du véhicule en étant fixée rigidement à des éléments de carrosserie du véhicule.

Le collecteur d'auvent 4 est fixé par soudage d'une part à la partie formant nez 5a de la traverse inférieure de baie 5 par l'intermédiaire de la cloison de collecteur d'auvent 7 et d'autre part à une feuillure inférieure 3a du tablier 3. Les parties d'extrémités de ce collecteur sont par ailleurs fixées par soudage respectivement aux deux goussets latéraux 8.

Le collecteur d'auvent 4 présente la forme générale d'une gouttière destinée à recevoir notamment un mécanisme d'essuie-glace du véhicule.

Chaque gousset 8 est fixé à la doublure de traverse inférieure de baie 10 et au support de suspension 9 par soudage et s'étend suivant une direction sensiblement parallèle à la direction longitudinale du véhicule.

La structure comprend également une traverse de planche de bord 11 s'étendant sensiblement transversalement à la direction longitudinale du véhicule et sensiblement parallèle à la traverse inférieure de baie 5 en étant espacée longitudinalement de cette dernière en arrière.

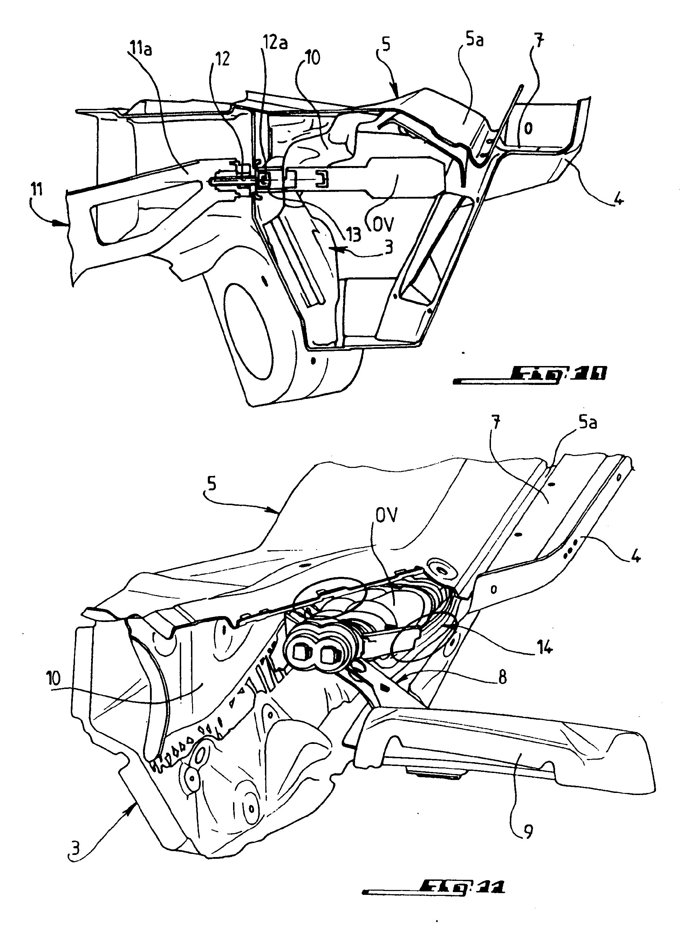

La traverse de planche de bord 11 est fixée au corps creux formé par le tablier supérieur 3 et la doublure de traverse inférieure de baie 10 par au moins une vis de fixation 12 dont la tête 12a est engagée dans une entretoise 13 interposée entre deux parois parallèles respectivement du tablier supérieur 3 et de la doublure 10, la vis 12 étant ancrée dans un trou taraudé correspondant d'une partie 11a de la traverse de planche de bord 11 comme cela ressort mieux de la figure 10.

Selon l'invention, la structure comprend également deux cloisons latérales rigides 14 permettant de renforcer la partie formant nez 5a de la traverse inférieure de baie 5 et qui sont fixées chacune au gousset correspondant 8 et sous la partie formant nez 5a de la traverse 5.

Plus précisément, chaque cloison 14 a sa partie supérieure coudée 14a fixée par soudage à la partie formant nez 5a de la traverse inférieure de baie 5 et sa partie inférieure en forme générale de plaque rigide 14b fixée à la face interne d'une paroi sensiblement verticale 8a du gousset 8 par l'intermédiaire de deux boulons de fixation 16 traversant la paroi 8a du gousset 8 et la paroi 14b de la cloison de renforcement 14.

Ainsi, la partie formant nez avant 5a de la traverse 5 est mécaniquement retenue contrairement à celle d'une traverse connue.

Les deux cloisons de renforcement 14, dans leurs parties situées entre le gousset 8 et la partie formant nez 5a de la traverse inférieure de baie 5, sont disposées respectivement dans des plans inclinés convergeant l'un vers l'autre vers le haut.

Chacune des cloisons de renforcement 14 présente une ouverture 15 constituant une fenêtre à travers laquelle peut circuler de l'air à destination de l'habitacle 2 du véhicule. Ainsi, chaque cloison 14 peut être considérée comme une cloison d'auvent. Ces cloisons 14 situées à droite et à gauche du véhicule sont tout d'abord fixées à la traverse inférieure de baie 5 et l'ensemble est ensuite chargé sur la base roulante appartenant à la structure de carrosserie du véhicule. Ensuite, les cloisons sont fixées par les boulons 16 aux goussets d'auvent 8.

Ainsi, les deux cloisons 14 assurent un raidissement du pare-brise permettant d'inhiber l'action des vibrations sur celui-ci dues au moteur en fonctionnement du véhicule.

Par ailleurs, la fenêtre 15 de chaque cloison de renforcement 14 permet le passage d'un outil de vissage OV comme cela ressort mieux de la figure 11 de manière que son extrémité active puisse pénétrer dans l'entretoise 13 et accéder à la tête 12a de la vis de fixation 12, une fois cette dernière engagée à la main dans l'entretoise et partiellement vissée au trou taraudé correspondant de la partie 11a de la traverse de planche de bord 11, pour bloquer la vis 12 et assurer la fixation de la traverse de planche de bord 11 au tablier supérieur 3 et à la doublure de traverse inférieure de baie 10. Bien entendu, chaque cloison de renforcement 14 et sa fenêtre 15 doivent être dimensionnées afin qu'elles répondent au problème de vibrations du pare-brise tout en autorisant le passage d'une visseuse pour fixer la traverse de planche de bord 11. La figure 11 montre dans les deux zones en ellipse le jeu minimal suffisant (par exemple d'environ 1 à 2 mm) entre la visseuse OV et les éléments environnants de la structure pour permettre le passage de la visseuse lors du vissage ou du dévissage de la vis de fixation 12.

Chaque gousset d'auvent 8 comprend également une paroi 8b s'étendant perpendiculairement à la plaque 8a de ce gousset au-dessus de celle-ci et qui comporte des perçages 8c d'un nombre égal à celui des boulons de fixation 16 de la plaque 14b de la cloison de renforcement correspondante 14 à la paroi 8a du gousset.

Les perçages 8c de chaque gousset 8 sont réalisés en étant disposés en aplomb des têtes de vis 16a des boulons 16 afin de les rendre visibles à un opérateur lors de la fixation de la cloison de renfort 14 à la plaque 8a du gousset correspondant 8, afin que l'opérateur n'ait pas à se baisser lors du vissage des boulons 16, améliorant ainsi ses conditions de travail.

La paroi 14b de chaque cloison de renforcement 14, lorsqu'elle est fixée par les boulons 16 à la paroi 8a du gousset correspondant 8, permet de rigidifier ce gousset qui doit résister dans un premier temps à un choc frontal au véhicule, mais doit ensuite se déformer longitudinalement pour éviter des intrusions d'éléments de la structure de la partie avant de la caisse du véhicule dans l'habitable de ce dernier. A cet effet, les perçages 8c de chaque gousset de renforcement 8 sont dimensionnés pour affaiblir le gousset et permettre à celui-ci de s'écraser longitudinalement sous une certaine intensité du choc frontal.

Les cloisons de renforcement 14 permettent ainsi à la fois de raidir le pare-brise du véhicule pour inhiber l'effet des vibrations provenant du moteur du véhicule, d'assurer une circulation d'air dans l'auvent du véhicule, de permettre à un opérateur d'accéder manuellement à chaque vis de fixation de la traverse de planche de bord pour la prévisser à une partie de cette traverse au travers de l'entretoise correspondante ou de la retirer de cette entretoise une fois dévissée et de permettre le passage d'un outil de vissage pour visser ou dévisser chaque vis de fixation de la traverse de planche de bord.

## Revendications

1. Structure d'une partie avant de la caisse d'un véhicule automobile comportant un tablier sensiblement transversal (3) séparant l'habitacle (2) du compartiment moteur (1) du véhicule et dont une partie supérieure comporte, d'avant en arrière, un collecteur d'auvent transversal (4) et une traverse inférieure de baie (5) sur laquelle vient s'appuyer la partie inférieure du pare-brise (6), et deux goussets latéraux (8) chacun solidaire d'une doublure de la traverse inférieure de baie (5) et d'un support de suspension (9), les extrémités du collecteur d'auvent (4) étant solidaires des deux goussets (8), **caractérisée en ce qu'**elle comprend deux cloisons latérales rigides (14) de renforcement de la traverse inférieure de baie (5), fixées chacune d'une part au gousset correspondant (8) et d'autre part à la traverse inférieure de baie (5) au niveau de la partie d'extrémité avant (5a) de cette dernière, lesdites cloisons (14) étant disposées dans des plans inclinés convergeant l'un vers l'autre vers le haut.

2. Structure selon la revendication 1, **caractérisée en ce que** chaque cloison de renforcement (14) comprend une fenêtre (15) permettant une circulation d'air dans le collecteur d'auvent (4) et le passage d'un outil de vissage (OV) pour fixer une traverse de planche de bord (11) à la structure par l'intermédiaire de l'ensemble comprenant la partie supérieure du tablier (3) et la doublure de traverse inférieure de baie (10).

3. Structure selon la revendication 1 ou 2, **caractérisée en ce que** chaque cloison de renforcement (14) est fixée par soudage à la traverse inférieure de baie (5) et par des boulons (16) au gousset associé (8).

4. Structure selon la revendication 3, **caractérisée en ce que** chaque gousset (8) comprend une paroi sensiblement verticale (8a) à laquelle est fixée par les boulons (16) une paroi d'extrémité (14b) de la cloison correspondante (14) et, s'étendant perpendiculairement à la paroi verticale (8a), une paroi (8b) comportant des perçages traversants (8c) permettant de visualiser les boulons de fixation et d'assurer un écrasement longitudinal du gousset (8) en cas de choc frontal au véhicule d'une intensité déterminée.

5. Véhicule automobile, **caractérisé en ce qu'**il comprend une structure selon l'une quelconque des revendications précédentes.

## Claims

1. Structure of a front part of the body of an automobile vehicle comprising a substantially transverse bulkhead (3) separating the passenger compartment (2) from the engine compartment (1) of the vehicle, and an upper part of which comprises, from front to back, a transverse cowl collector (4) and a lower bay crosspiece (5), on which the lower part of the windscreen (6) comes to rest, and two lateral gussets (8), each integral with a liner of the lower bay crosspiece (5) and with a suspension support (9), the ends of the cowl collector (4) being integral with the two gussets (8), **characterized in that** it comprises two rigid lateral partitions (14) for reinforcement of the lower bay crosspiece (5), each fixed on the one hand to the corresponding gusset (8) and on the other hand to the lower bay crosspiece (5) at the level of the front end part (5a) of the latter, the said partitions (14) being disposed in inclined planes converging one towards the other upwards.

2. Structure according to Claim 1, **characterized in that** each reinforcement partition (14) comprises a window (15) allowing a circulation of air in the cowl collector (4) and the passage of a screwing tool (OV) to fix an instrument panel crosspiece (11) to the structure by means of the assembly comprising the upper part of the bulkhead (3) and the liner of the lower bay crosspiece (10).

3. Structure according to Claim 1 or 2, **characterized in that** each reinforcement partition (14) is fixed by welding to the lower bay crosspiece (5) and by bolts (16) to the associated gusset (8).

4. Structure according to Claim 3, **characterized in that** each gusset (8) comprises a substantially vertical wall (8a) to which an end wall (14b) of the corresponding partition (14) is fixed by the bolts (16) and, extending perpendicularly to the vertical wall (8a), a wall (8b) comprising through-bores (8c) allowing the fixing bolts to be seen and allowing a longitudinal crushing of the gusset (8) to be ensured in the case of a frontal impact to the vehicle at a determined intensity.

5. Automobile vehicle, **characterized in that** it comprises a structure according to any of the preceding claims.

## Patentansprüche

1. Struktur eines Vorderteils des Fahrzeugaufbaus eines Kraftfahrzeugs, die eine im Wesentlichen transversale Schürze (3) aufweist, die die Fahrgastzelle (2) von dem Motorraum (1) des Fahrzeugs trennt und von welcher ein oberer Teil von vorn nach hinten einen Windlaufquerteilsammler (4) und einen unteren Öffnungsquerbalken (5) aufweist, auf dem sich der untere Teil der Windschutzscheibe (6) abstützt, und zwei seitliche Eckstücke (8), die jeweils mit einer Innenverkleidung des unteren Öffnungsquerbalkens (5) und einem Aufhängungsträger (9) fest verbunden sind, wobei die Enden des Windlaufquerteilsammlers (4) fest mit den zwei Eckstücken (8) verbunden sind, **dadurch gekennzeichnet, dass** sie zwei starre Seitenwände (14) zum Verstärken des unteren Öffnungsquerbalkens (5) aufweist, die jeweils einerseits an dem entsprechenden Eckstück (8) und andererseits an dem unteren Öffnungsquerbalken (5) auf dem Niveau des vorderen Endteils (5a) dieses Letzteren befestigt sind, wobei die Wände (14) in schiefen Ebenen, die nach oben zueinander konvergieren, angeordnet sind.

2. Struktur nach Anspruch 1, **dadurch gekennzeichnet, dass** jede Verstärkungswand (14) ein Fenster (15) aufeist, das eine Luftzirkulation in dem Windlaufquerteilsammler (4) und das Durchgehen eines Schraubwerkzeugs (OV) zum Befestigen eines Armaturenbrettquerbalkens (11) an der Struktur über die Einheit erlaubt, die den oberen Teil der Schürze (3) und die Innenverkleidung des unteren Öffnungsquerbalkens (10) umfasst.

3. Struktur nach Anspruch 1 oder 2, **dadurch gekennzeichnet, dass** jede Verstärkungswand (14) durch Schweißen an dem unteren Öffnungsquerbalken (5) und mit Bolzen (16) an dem dazugehörenden Eckstück (8) befestigt ist.

4. Struktur nach Anspruch 3, **dadurch gekennzeichnet, dass** jedes Eckstück (8) eine im Wesentlichen vertikale Wand (8a) aufweist, an der mit Bolzen (16) eine Endwand (14b) der entsprechenden Wand (14) befestigt ist, und, sich senkrecht zu der vertikalen Wand (8a) erstreckend, eine Wand (8b), die durchgehende Bohrungen (8c) aufweist, die es erlauben, die Befestigungsbolzen zu sehen und ein Längszusammendrücken des Eckstücks (8) in dem Fall eines Frontalzusammenstoßes am Fahrzeug mit einer bestimmten Stärke sicherzustellen.

5. Kraftfahrzeug, **dadurch gekennzeichnet, dass** es eine Struktur nach einem der vorhergehenden Ansprüche aufweist.
